Europäisches Patentamt

(19) European Patent Office

Office européen des brevets

(11) Publication number: **0 103 662**
A1

(12) # EUROPEAN PATENT APPLICATION

(21) Application number: **82305683.3**

(22) Date of filing: **26.10.82**

(51) Int. Cl.³: **B 23 K 11/24**

(30) Priority: **16.09.82 GB 8226418**

(43) Date of publication of application:
**28.03.84 Bulletin 84/13**

(84) Designated Contracting States:
**DE FR GB**

(71) Applicant: **A.R.O. MACHINERY CO. LTD.**
**190 Castelnau**
**London SW13 9DJ(GB)**

(72) Inventor: **Denning, Robert Edwin Arthur**
**8A Westcroft Square Hammersmith**
**London W6 0TB(GB)**

(72) Inventor: **Sugimoto, Nobuo**
**2-3-2-101 Yokodai Isogo-ku**
**Yokohama-shi Kanagawa-ken 235(JP)**

(74) Representative: **Hayward, Denis Edward Peter et al,**
**Lloyd Wise, Tregear & Co. Norman House 105-109 Strand**
**London WC2R OAE(GB)**

(54) Improvements in or relating to control systems for electric spot-welding machines.

(57) The invention concerns apparatus for the automatic control of electric spot-welding, in which termination of the weld is initiated by a peak detector that detects peaking of the voltage across the weldment. In order to prevent unsatisfactory welds due to weld termination following upon a spurious peak voltage occurring too early in the welding cycle, a 'front stop' time is set and the circuitry is arranged to prevent a first peak voltage occurring before the front stop time from initiating termination of the weld. Preferably, a pair of flip-flops and a counter are employed with a count set into the counter representing the front stop time. Peak voltage signals are applied to the second flip-flop but no weld terminating signal appears until the second flip-flop is triggered by the first flip-flop. The first flip-flop is itself not clocked until triggered by the counter output when the preset count is reached.

EP 0 103 662 A1

./...

Fig.2.

Improvements in or relating to control systems for electric
spot-welding machines

This invention relates to systems for the control of electric
spot-welding machines.

An automatic adaptive control system for spot-welding machines
is known in which during a welding operation the peak voltage is
detected and weld termination is initiated shortly after the peak
in order to avoid weld splash. However, this system suffers from
certain operational disadvantages. The time of occurrence of the
peak voltage during a welding operation can vary according to the
nature of the components being welded, and whereas an early peak
voltage can be quite normal in some conditions, there are other
circumstances in which an early peak may arise abnormally and thereby
give a spurious indication of the state that the weld has reached.
Thus, poor fit-up of components, or bad component interface conditions
due to the presence of oil, dirt, rust or other foreign material,
can result in an abnormally high resistance and a consequent early
voltage spike, and if the control system accepts such an abnormal
early spike as the normal peaking of the welding voltage an
unsatisfactory weld will result.

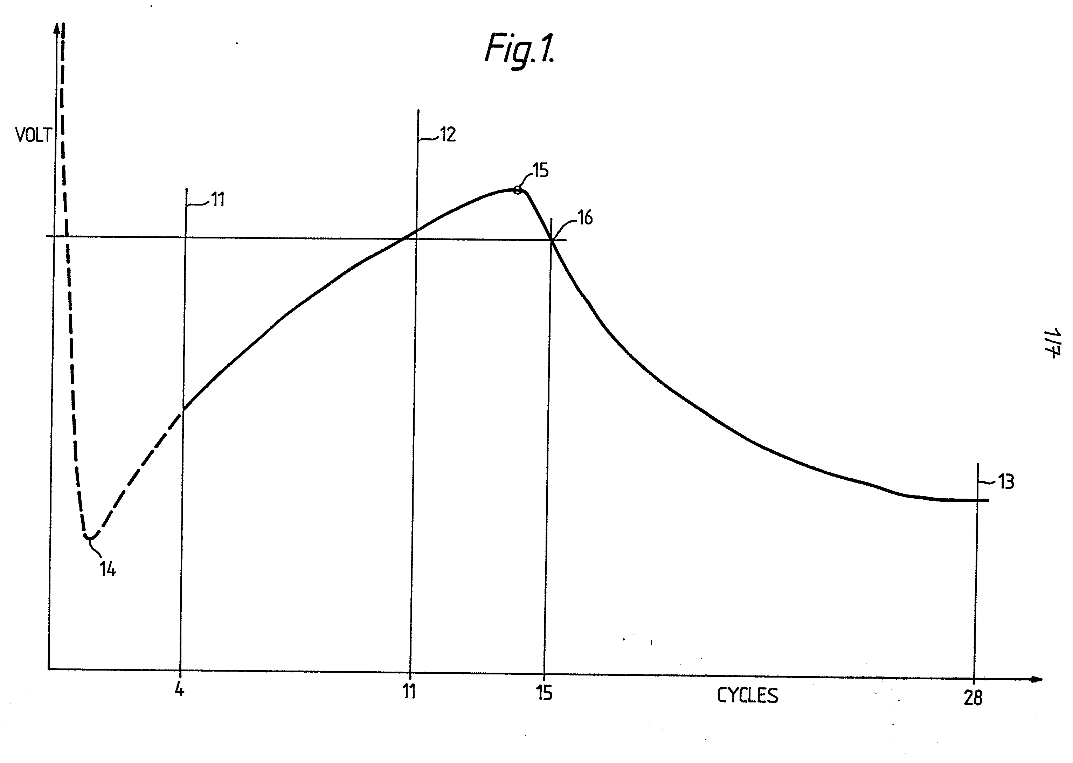

It is therefore an object of the invention to overcome this
problem. In the welding cycle of the known automatic adaptive spot-
welding control systems, as shown in Figure 1, there is first a
'wake-up' time, indicated by the vertical line 11, at which the
system readies itself for monitoring the voltage across the weldment, then a notional 'front stop' time, indicated by the vertical line 12, beyond which the control system will respond to peaking of the voltage followed by a voltage drop of a preset amount by terminating the welding cycle, and finally a 'back stop' time, indicated by the vertical line 13, at which the welding cycle is terminated in any event. The characteristic curve in Figure 1 shows the normal circumstances in which the voltage settles to a low value, as at 14, before 'wake-up', then rises progressively through and beyond 'wake-up' and the 'front stop' 12 to peak at 15, after which weld termination occurs at 16 when the voltage has dropped below the peak value 15 by a pre-set amount. If the voltage peaks later than the front stop time, as shown, the weld will be satisfactory. The problem arises if the voltage peaks before the front stop time 12, in which case the weld will probably be unsatisfactory.

It will be understood, however, that in the prior control systems there is no actual front stop time setting but this is a notional or imaginary setting used for the purpose of explaining the problem.

According to the present invention, there is provided a method of automatic control for an electric spot-welding machine comprising detecting the peak voltage across the weldment during the welding cycle and employing the detected peak voltage to determine the point of automatic initiation of the termination of welding shortly thereafter, setting a front stop time during the welding cycle selected such that if there is any undesirably early peaking of the voltage that if employed to determine the initiation of weld termination would not lead to a satisfactory weld such peaking will occur prior to the front stop time setting, and causing any such early peaking of the voltage prior to the front stop time setting to reset the peak detector without initiation of weld termination.

The invention further provides electric spot-welding control apparatus comprising a peak detector for detecting the peak voltage across the weldment during each welding cycle, weld termination circuitry operative to terminate each weld automatically a calculated period after the occurrence of a peak voltage in response to detection of said peak voltage by the peak detector, means to select and set a front stop time during the welding cycle said front stop time being selected such that any undesirably early voltage peak that would result in an unsatisfactory weld if the weld termination circuitry were to respond to it will occur before the front stop time, and means to inhibit response by the weld termination circuitry to a peak voltage occurring before the selected front stop time and to reset the peak detector for detection of the next peak voltage.

The techniques according to the invention will now be explained in more detail by way of example, and with reference to the accompanying drawings, in which:-

Fig. 1, already described, is a voltage versus time characteristic to illustrate the operation of prior art spot-welding control systems,

Fig. 2 is a voltage versus time characteristic of a first embodiment of the present invention,

Fig. 3 is a circuit diagram of the first embodiment,

Fig. 4 is a voltage versus time characteristic of a second embodiment,

Figure 5 is a voltage versus time characteristic of a third and preferred embodiment,

Figure 6 is a circuit diagram of the third and preferred embodiment, and

Figure 7 is a circuit diagram of the second embodiment.

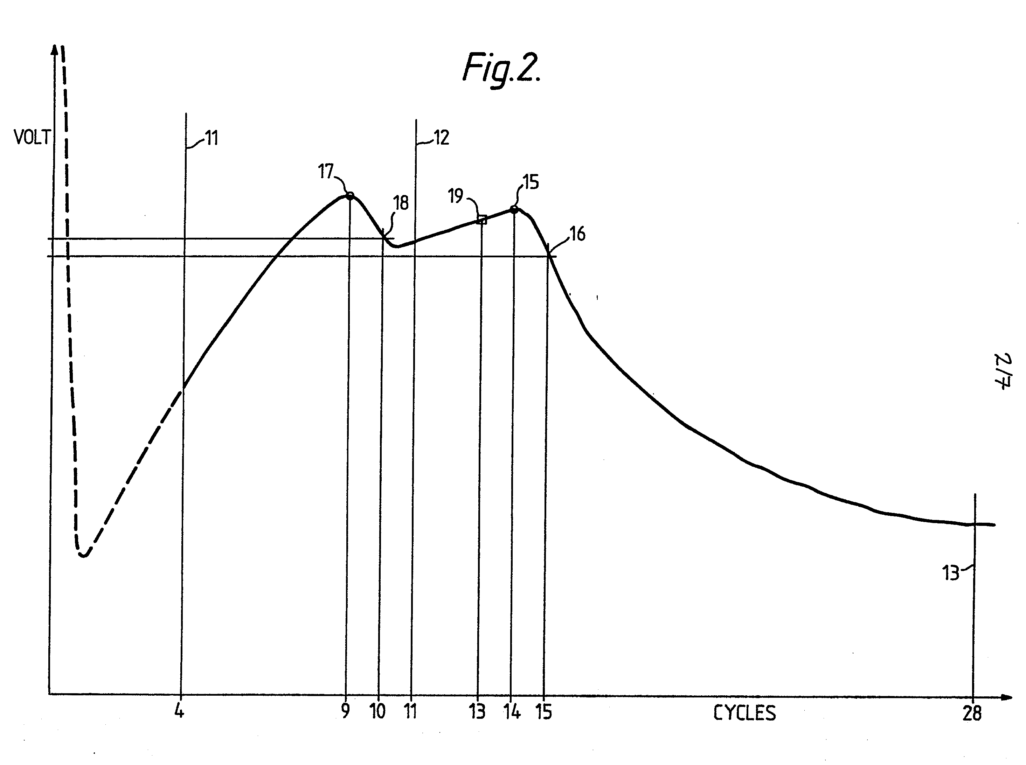

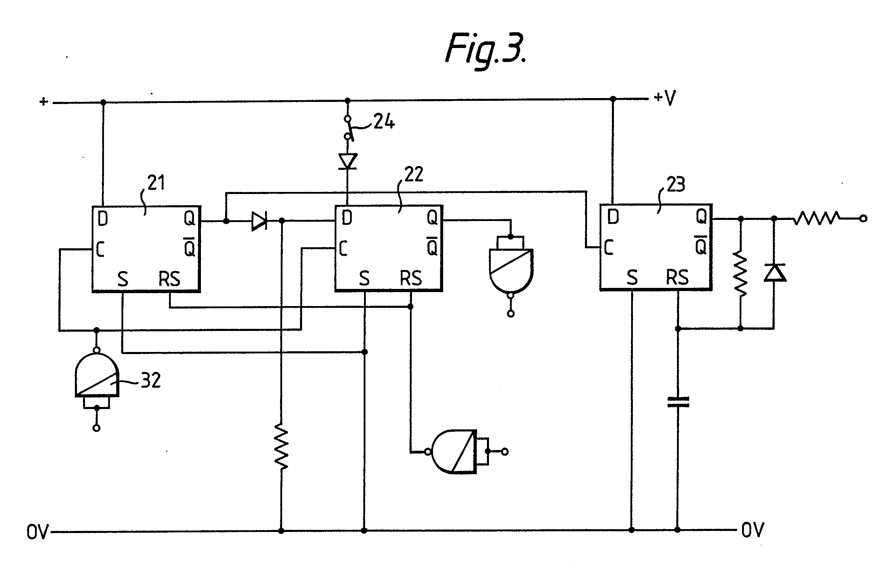

The voltage characteristic of Figure 2 shows the simple situation in which the voltage is rising at wake-up 11 but peaks, as at 17, before the front stop 12, at a time in the weld cycle when it is known that a weld termination at the point 18, representing the preset voltage drop below the peak at which the system is set to terminate the welding cycle, would be too early to give a satisfactory weld. If it is reliably known that this single too early peak will occur, the system can be adapted to override it by arranging for the peak detector not to respond to the first peak and 'termination' incident but to be re-set for response, as at 19, as the voltage rises again beyond the front stop 12. Weld termination will then occur correctly at the point 16 after the second peak 15. In a simple circuit, the first 'termination' incident at 18 can be treated as a 'switch-on' point, a predetermined time period, say 3 time cycles, after which the peak detector is re-set. But this, of course, involves the operator knowing that two peaks will always occur and when the first peak will occur in relation to the front stop.

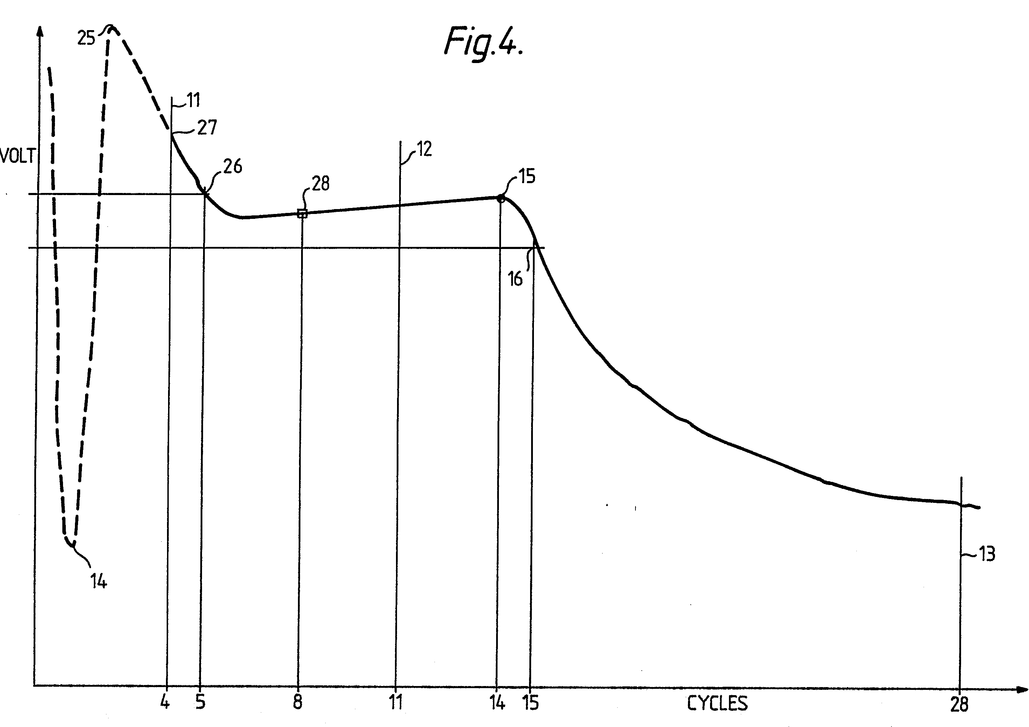

Figure 3 is a circuit and block diagram of a simple cascade of flip-flops 21, 22, 23 for over-riding the first 'termination' incident and thereafter re-setting the peak detector. 'Termination' signals are applied to both the first and second flip-flops 21, 22 via a gate 32. If the over-ride switch 24 is closed the second flip-flop 22 is triggered directly. If the switch 24 is open, the first flip-flop 21 has to be triggered by the first 'termination' incident before the second flip-flop can be triggered by the second termination signal. The third flip-flop 23 is triggered directly by the first flip-flop 21 and applies the peak detector re-set signal to the base of a peak detector transistor.

Referring now to Figure 4, this shows a case in which a very early voltage spike 25 occurs before 'wake-up' 11. The voltage is therefore already falling at 'wake-up' so there will be a spurious very early 'termination' incident at 26 when the voltage has dropped the pre-set amount below the pseudo-peak 27 experienced at 'wake-up'. This can be discriminated against if the control system is so arranged that only a second 'termination' incident occurring before the front stop 12 is effective to terminate the welding cycle, the first incident only serving to re-set the peak level detector, as at 28. However, after the pre-set front stop time has elapsed, a single 'termination' incident, such as that at 16, will be effective to terminate the welding cycle.

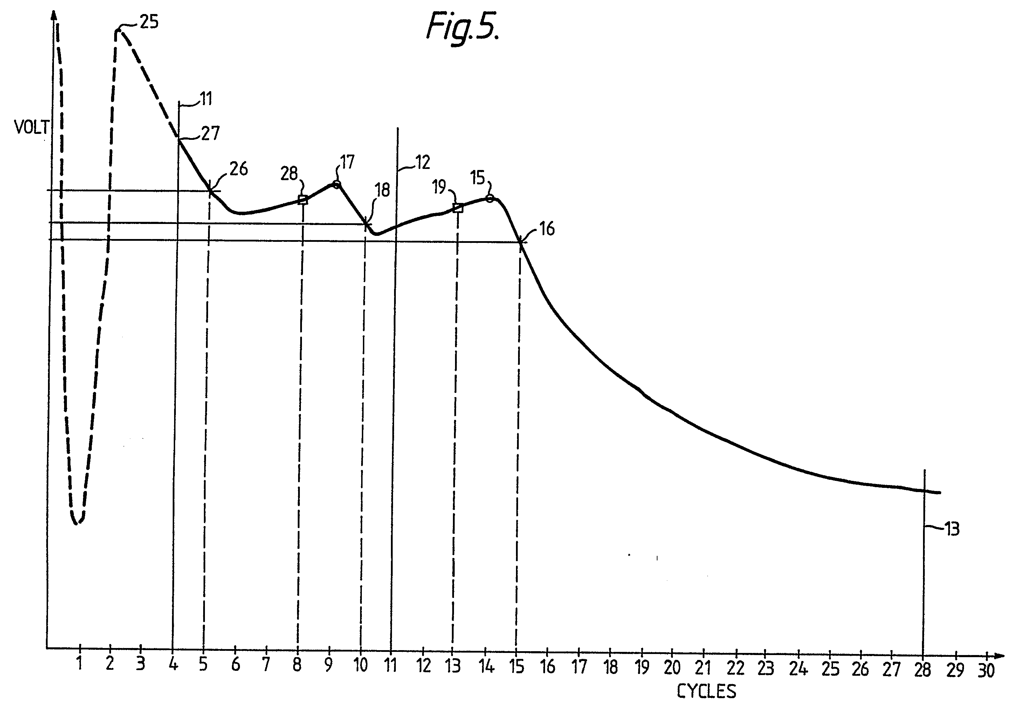

Figure 5 shows a third type of voltage characteristic which is essentially a combination of the characteristic curves of Figures 2 and 4. That is to say, there is a very early voltage spike 25 producing a first 'termination' incident 26, and the further voltage peak 17 occurring before the front stop 12, producing a second 'termination' incident 18, and both incidents 26 and 18 must be discriminated against. This can be achieved if any 'termination' incident occurring during a pre-set time period after 'wake-up' cannot trigger termination of the welding cycle but only serves to re-set the peak level detector. Thus, the 'termination' incident 26 causes the peak level detector to re-set for the first time at 28, and the second 'termination' incident 18 causes the peak level detector to re-set a second time at 19. However, beyond the front stop 12 the single termination event 16 suffices to trigger termination of the welding cycle.

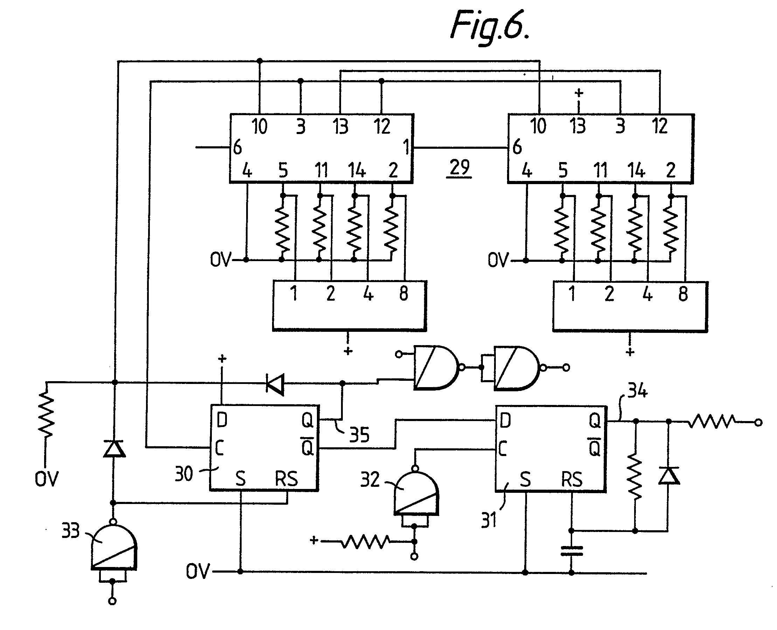

Figure 6 shows a circuit for achieving this last result to deal with the situation of Figure 5. A counter 29 is incorporated to which the 'wake-up' signal is applied via gate 33, and the first flip-flop 30 is not triggered until the pre-set time in the counter runs out. 'Termination' signals are applied to the second flip-flop 31 via the gate 32 but are ineffective to clock the flip-flop until the trigger signal arrives from the first flip-flop 30. The peak detector re-set signals are applied to the peak detector from the output 34 of flip-flop 31.

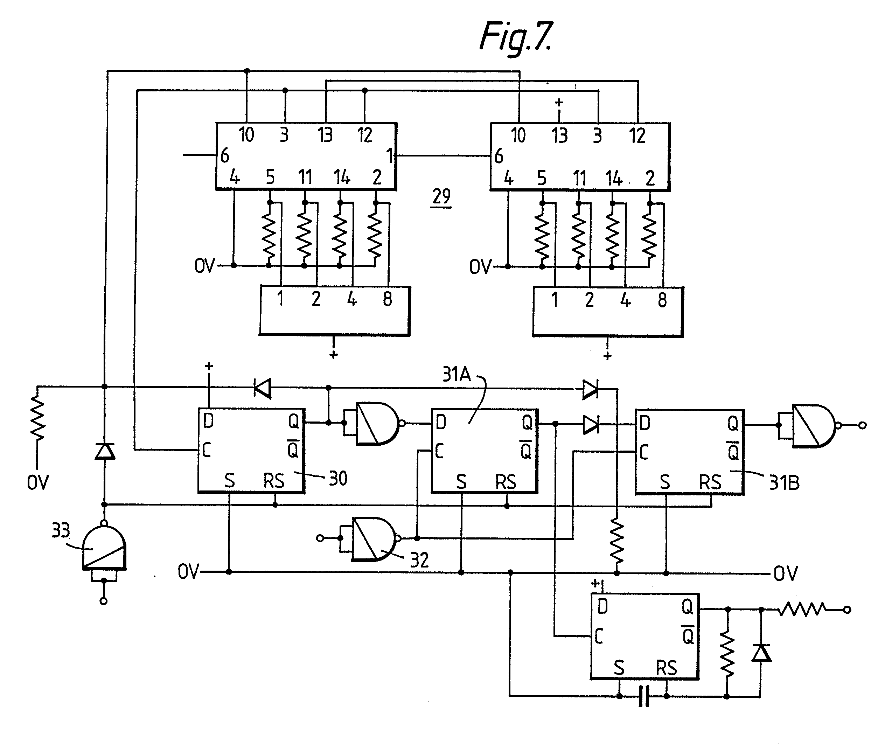

To deal with the situation shown in Figure 4, a circuit such as that of Figure 7 may be employed. The circuit of Figure 7 is basically that of Figure 6 with two flip-flops 31A, 31B in cascade instead of the one flip-flop 31. The extra flip-flop, which also receives the 'termination' signal via gate 32, ensures that a second 'termination' incident occurring while the time set by the counter 29 is still running will produce termination of the welding cycle even though the first flip-flop 30 has still not been clocked by the counter. After the set time has expired and the counter has clocked the flip-flop 30, a single 'termination' incident will suffice to terminate the welding cycle. Flip-flop 31A provides peak detector re-set.

In both the circuits of Figures 6 and 7, the counters are driven by square wave clock pulses generated within the main control system so that all operations are in synchronism.

It will be understood that the setting of the front stop, and the choice of circuit, depends on the particular work to be welded and knowledge of what the voltage characteristic will be like. In practice, there tends to be a trade-off between weld quality control and control to achieve economic production. The circuit employed is tuned with the front stop set at zero; and the front stop is, in general, the last parameter to be set.

0103662

8

CLAIMS:-

1.   A method of automatic control for an electric spot-welding machine comprising detecting the peak voltage across the weldment during the welding cycle and employing the detected peak voltage to determine the point of automatic initiation of the termination of welding shortly thereafter, setting a front stop time during the welding cycle selected such that if there is any undesirably early peaking of the voltage that if employed to determine the initiation of weld termination would not lead to a satisfactory weld such peaking will occur prior to the front stop time setting, and causing any such early peaking of the voltage prior to the front stop time setting to reset the peak detector without initiation of weld termination.

2.   A method according to claim 1, wherein if a first peak voltage occurs before the front stop time, the second peak voltage to occur determines the weld termination, but if the first peak voltage occurs after the front stop time that first peak voltage determines weld termination.

3.   A method according to claim 1, wherein each and every peak voltage occurring before front stop time is inhibited from determining weld termination, but the first peak voltage occurring after front stop time determines weld termination.

4.   Electric spot-welding control apparatus comprising a peak detector for detecting the peak voltage across the weldment during each welding cycle, weld termination circuitry operative to terminate each weld automatically a calculated period after the occurrence of a peak voltage in response to detection of said peak voltage by the peak detector, means to select and set a front stop time during the welding cycle said front stop time being selected such that any undesirably early voltage peak that would result in an unsatisfactory weld if the weld termination circuitry were to respond to it will occur before the front stop time, and means to inhibit response by the weld termination circuitry to a peak voltage occurring before the selected front stop time and to re-set the peak detector for detection of the next peak voltage.

5.    Apparatus according to claim 4, comprising a first flip-flop, a second flip-flop and enabling means, the first flip-flop being clocked by each peak voltage signal from the peak detector when the enabling means is inoperative, and the second flip-flop being clocked by each peak voltage signal when the enabling means is operative, but only being clocked by a second peak voltage signal upon having been enabled by the first flip-flop in response to the first peak voltage signal when the enabling means is inoperative.

6.    Apparatus according to claim 5, comprising a third flip-flop that delivers a peak detector re-set signal when clocked by the first flip-flop in response to the first peak voltage signal.

7.    Apparatus according to claim 5 or claim 6, wherein said enabling means comprises an over-ride switch that enables the second flip-flop when closed.

8.    Apparatus according to claim 5 or claim 6, wherein said enabling means comprises a counter that enables the second flip-flop when a predetermined count has been reached.

9.    Apparatus according to claim 5, comprising a first flip-flop, a second flip-flop and a counter, the second flip-flop receiving the peak voltage signals but being inhibited from delivering a weld terminating output signal until triggered by the first flip-flop, and the first flip-flop being inhibited from triggering the second flip-flop until itself triggered by an output from the counter upon reaching of a predetermined count.

Fig.1.

VOLT

11

12

15

16

14

13

4      11      15      CYCLES      28

1/7

Fig.2.

0103662

Fig.3.

# Fig.4.

VOLT

25

11
27
26
28
12
15
16
14
13

4  5     8     11      14 15                    28    CYCLES

4/7

0103662

Fig.5.

Fig.6.

Fig.7.

0103662

| | European Patent Office | **EUROPEAN SEARCH REPORT** | Application number |
|---|---|---|---|

EP 82 30 5683

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | GB-A-2 081 925 (NISSAN MOTOR)<br>*Abstract; figure 4*<br><br>--- | 1-9 | B 23 K 11/24 |
| X | DE-A-3 150 199 (MIDLAND-ROSS)<br>*Page 16, line 2 - page 18, line 3*<br><br>--- | 1-4 | |
| A | EP-A-0 050 950 (SQUARE D)<br><br>--- | | |
| A | US-A-3 493 715<br>(TAYLOR-WINFIELD)<br><br>----- | | |

**TECHNICAL FIELDS SEARCHED (Int. Cl. 3)**

B 23 K

The present search report has been drawn up for all claims

| Place of search | Date of completion of the search | Examiner |
|---|---|---|
| THE HAGUE | 20-12-1982 | HOORNAERT W. |

EPO Form 1503 03 82

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document